# EUROPEAN PATENT APPLICATION

(11) **EP 1 647 653 A2**
(43) Date of publication of application: **19.04.2006**
(21) Application number: 05077361.3
(22) Date of filing: 14.10.2005
(51) Int. Cl.: E04H 6/00

(54) **Bicycle storage device**

(30) Priority: 15.10.2004 NL 1027267
(71) Applicant: Minck, Lodewijk Petrus Maria, NL-2181 VG Hillegom (NL)
(72) Inventor: Minck, Lodewijk Petrus Maria, NL-2181 VG Hillegom (NL)
(74) Representative: Assendelft, Jacobus H.W.

(57) **Abstract**

This invention concerns a bike storage with a first device (1) to convey bikes (6) sideward in a first space (3) and a second device (9) to convey bikes upward in a second space (8), at least partly above or below said first space (3). Transferring means (16, 21, 14) are provided to transfer the bike from the one to the other device (1, 9), wherein the front wheel (5) carries out at least one of the following movements: up or down; front or backward; turning around an axis parallel to the hub axis.

## Description

The invention relates to a bicycle storage device. Such is e.g. known from NL-A-1017026.

The object of the invention is, a.o., a device with which the bicycle can enter and exit the storage at the one level, e.g. the street, and can be stored at a higher or lower level, e.g. underground. Limited space requirements and structural simplicity are important. For that the invention is characterised by the enclosed claims.

The clamp preferably follows a track having a track part that deviates from a straight line. The track preferably has a substantially straight, upward extending part. By mounting the clamp to a guide and/or displacement means, such as an endless tooth belt, cable, chain or equivalent (flexible) means the clamp can follow the desired track to arrive at the conveyor chain in the correct manner. When the bicycle is suspended from the clamp, the rear wheel can bear against the tooth belt and move therewith. Then the tooth belt can take the same position each time. Preferably the track followed by the clamp is displacable by driving the guide and/or displacement means, e.g. upward, for which a displacement means is provided.

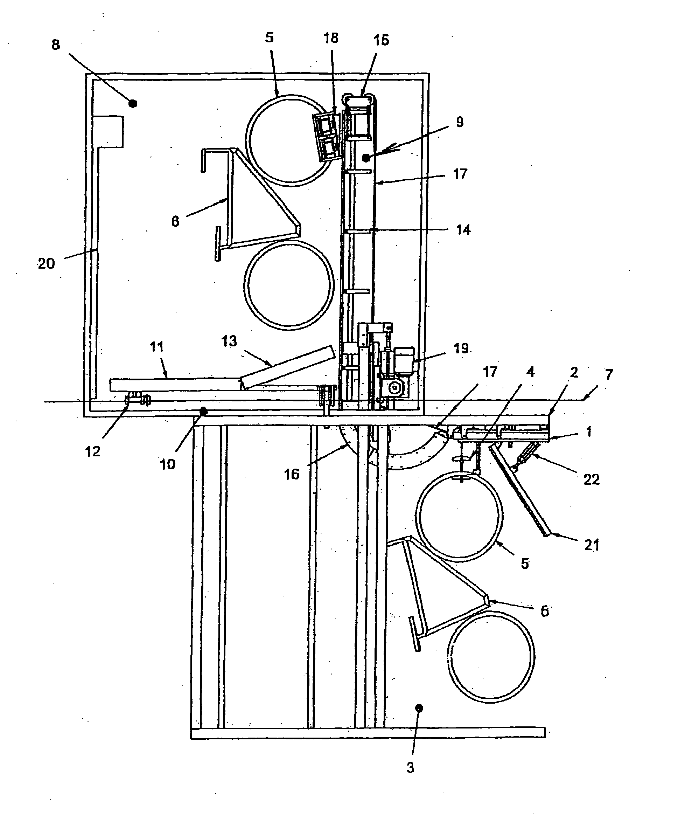

In the following the invention is illustrated by way of a non-limiting example, schematically shown in side view in the enclosed drawing, showing two bicycles in different positions.

An endless, driven conveyor chain 1 is shown, extending in a substantially horizontal plane close to the ceiling 2 of the storage space 3. The chain 1 is provided with suspension hooks 4 which each can have a front wheel 5 of a bicycle 6. The hooks alternatingly can differ in length, such that the bicycles are suspended alternatingly at a higher and lower level and the steers of adjacent hanging bikes will not mutually hook. The hooks 4 are further combined with means, e.g. a pressurised fluid driven cylinder, to move them between a hook position and a release position.

The space 3 is underground. At street level 7 there is an entrance space 8 containing a manipulator 9 to move the bikes in and out the space 3. The space 8 is completely enclosed and has to the left in the drawing an entrance door 20 for the bike.

The bike enters the space 3 from the space 8 through an opening 10 in the ceiling 2, to be closed with closing means 11. The e.g. pressurised fluid (pneumatically) driven means 11 can e.g. comprise two substantially plate shaped, flat lying parts that can be moved apart to the side and therefor e.g. bear on wheels 12. The means 11 also comprise a guiding gutter 13, having an upward inclined part. The gutter 13, adapted for the wheels 5 and the means 11 preferably move together during opening of the ceiling 2.

The manipulator 9 has a frame 14 to support guide rolls 15 and a curved guide 16 below level 7 onto which an endless tooth belt 17 runs, driven by means 19. A clamp 18 is mounted to the belt 17, and can have a part fixedly connected to the belt 17 and a part pivoting connected therewith. The clamp 18 can e.g. have an inflatable air bellows or another expandable element. The clamp 18 is combined woth means to activate the clamp when the front wheel of the bike is located therein. E.g, has the clamp 18 two opposite walls between which the wheel 5 fits with clearance. The one wall has high friction. The other wall is expandable to make the space between the walls smaller and clamp the wheel 5.

After locating the bike in the gutter 13 and clamping the front wheel 5 with the clamp 18, first automatic means check if persons are absent in the space 8. E.g. plate shepd parts 11 are elastically supported to detect the weight of a person standing on it. The detection means (also e.g. heat sensors or a light beam) are connected to locking means that lock the device when a person is detected in the space 8.

After releasing the locking means the clamp 18 is displaced upward by the propulsion 17, such that the bike arrives at the illustrated high, vertical position. Now the opening in the ceiling 2 is opened and the guideing gutter 13 is removed. Then the clamp 18 is mov3ed downward to below level 7 and follows guide 16. When arrived at the end of guide 16 distal from frame 14, the relevant hook 4 is pivoted into the hook position to engage below the wheel rim. Then the clamp 18 transfers the front wheel 5 to a hook 4. This transferring to the hook 4 runs smoothly since the expansion means smoothly lowers the clamping force and the front wheel 5 slowly slides from the clamp 18, at the same time rotating with the point of angagement with the hook 4 as fulcrum. Hanging from the hook 4 the bike 6 is horizontally conveyed further into the space 3.

When a bike is collected from the space 3, the wheel 5 suspending from the hook 4 is pushed into the clamp 18 by a pusher element 21. This pusher element 21 has a stabilising, positioning and checking function. The pusher element 21 is preferably designed to limit/avoid sideways (i.e. parallel to the hub axis) movement of the wheel and push against the wheel in radial direction (i.e. perpendicular to the hub axis). The pusher element 21 is preferably substantially U of V shaped and/or has two opposite, mutually angled side walls and a radially aigainst the wheel 5 pushing bottom wall. At least one of the side walls is preferably displacable, e.g. pivoting (e.g. against spring pre tension) mounted, to adapt the enclosed corner or spacing, respectively. Pusher element 21 is mounted pivoting around a horizontal axis and driven by a driving means such as a pressurised fluid cylinder 22. The pusher element 21 is further provided with sensors (e.g. light beam) to be able to detect the presence of the wheel 5, in the position in which the pusher element 21 pushes against the wheel 5 hanging in the hook 4. This this pusher element 21 is a means to displace the bike from the hook 4 to the clamp 18. Another means is also feasible to change the distance between bike/front wheel and the clamp 18, e.g. wherein the clamp 18 is mounted, by mediation of movement means, to its guide 17, that its position and/or distance to said guide can be changed with a view to couling/decoupling with the bike.

The pusher element 21 prevents that the wheel 5 will swing while hanging from the hook 4. After open clamp 18 is positioned along guide 16, element 21 pushes wheel 5 into clamp 18. Hanging from the hook 4, the wheel 5 turns with the angagement point with hook 4 als fulcrum towards ready standing clamp 18, by which the bike simultaneously moves upward. Them clamp 18 closes and fixedly clamps wheel 5. Then manipulator 9 is moved upward by a driving means, such as pressurised fluid cylinder, by which clamp 18 lifts wheel 5 from hook 4. Then hook 4 retracts out of the way. Then manipulator 9 lowers back again. Subsequently clamp 18 displaces along the track part 16 and then staight upward back to the high level and locates bike 6 in space 8. After re location of gutter 13, clamp 18 lowers until bike 6 rests with both wheels onto gutter 13.

The invention is above described for a bike storage room 3 at a level below the entrance 20 through which the cyclist brings its bike in/out the bike storage. In an variant of the invention said space 3 is a level higher. It is even feasible, that several spaces 3 are above each other (all or some under or above the ground) with each an own unit of bike suspension means (such as conveyor chain 1) to move the bikes after each other through the space 3. For said several superdjacent spaces 3 a manipulator 9 can be common.

It will be appreciated that the curved guide 16 can be absent for a space 3 that is above entrance 20. This is also true for the closing means 11. In stead of moving up/down of the clamp 18 with an endless conveyor belt, a different conveyor means 17 can be selected for the clamp 18, such as a cylinder or worm wheel. If a space 3 is present at a level above the entrance 20, the conveyor means 17 and/or manipulator 9 will correspondingly extend further upward than according to the drawing to be able to reach with the clamp 18 the hooks 4 at a high level at siad level.

The guide 16 can have a different shape and can be more or less than semi circular. It can also follow an angled track.

It is prefered, to locate in the space 3 between two succeeding hooks a separation wall (not shown), moving with the hooks 4, such that for each bike an own box is made. The separation walls are e.g. of tissue or foil, to be flexible and pleatable and protect the bike relative to adjacent suspended bikes and swinging. Preferably two adjacent separation walls are connected by a cross wall, such that in top view at three sides closed boxes are made, opening towards the outer side. Thus swinging of the bike, suspended by the hook 4, is additionally prevented.

The entrance 20 is preferably closed with a sliding door or sliding/pivoting door, preferably as a rigid panel, e.g. suspended and guided in guiding tracks or at arms, such that in opened situation the door projects into the space 8 at one side of the entrance opening over about 90° and is opened/closed through a combined sideways sliding and pivoting movement.

If a space 3 is absent at a level below entrance 20, an opening 10 in the floor of the space 8 can be absent and the closing means 11 can be absent. The closing means 11 can also be displaceble different from bearing on wheels 12.

It will be appreciated that the guide element 13 for a wheel tyre is also applicable when closing means 11 are absent. With the higher positioned guide part (in the drawing upwardly slanted towards the manipulator 9) of this element 13 it is prevented that e.g. the back splash guard of a bike hanging from the clamp 18 slides over the subsurface when the clamp 18 moves up or down and the bike is hanging substantially vertically from the clamp 18. The element 13 can be designed that the ramp-like part is removable, e.g. retractable or can be lowered, such that it does not obstruct the cyclist to easily push the front wheel into the clamp 18. The element 13 thus provides, that when the front wheel is lifted by the clamp 18, the back wheel is supported at a position which is horizontally shifted towards the manipulator 9 relative to the position at the back wheel when is bears on a horizontal bearing surface. Besides the element 13 can have a wheel gutter as a straight guidance for the bike wheels. For, the cyclist typically is not able to hold the bike steer when the front wheel 5 is close to the clamp 18.

The hooks 4 are preferably sideways retractable and/or mounted with clearance in forward/rearward direction. Sideways retracting is e.g. provided by a convenient actuator active close to the location where the wheel 5 is transferred between the hook 4 and clamp 18. While wheel 5 hangs from clamp 18, the hook 4 is sideways pivoted below the rim. The clearance is used to automatically guide hook 4 along an obstructing spoke.

The clamp 18 preferably keeps a fixed orientation relative to the track it follows. In the shown embodiment the clamp 18 is rotation free fixed to the belt 17. The belt 17 follwos the curavture of the guide 16. Thus clamp 18 is automatically tilted over 90° when arriving the lowest point of guide 16 and holds wheel 5 at the highest, part. After moving further along guide 16 towards device 1 clamp 18 is tilted over more then 90°. Clamp 18 preferably carries out at least one or more of the following movements relative to manipulator 9 or frame 14: merely up or down; up or down in combination with forward or backward; merely forward or backward; tilting.

Also other variants belong to the invention is defined by the claims.

## Claims

1. Bike storage with a first device (1) to convey bikes (6) forward or sideward and a second device (9) to convey bikes upward, and with transferring means (16, 21, 14) to transfer the bike from the one to the other device (1, 9)..

2. Bike storage according to claim 1, wherein the first device (1) is designed for conveyance in a first space (3) and the second device is designed for conveyance in a second space (8), at least partly below or above said first space (3); the first and/or second device is provided with a relative thereto upward and/or forward displacable and/or tiltable first element (18, 21) to releasably engage a bike wheel (5); the first and/or second device is provided with a second element (4) to releasably engage a bike wheel (5); displacement means to displace the wheel (5) during transferring from the first to the second element, or vice versa.

3. Storage according to claim 2, wherein the displacement means are designed to displace or tilt the first or second device and the associated element (4, 18, 21) commonly and/or the second element (4) separately; and with a pusher element (21) with which a wheel (5) held by the second element (4) is brought to the first element (18).

4. Method for operating an automatic bike storage, wherein a first element (18) holds the front wheel (5), the first element (18) moves up or down to a storage at a higher or lower level and there gives the front wheel (5) to a second element (4) that at a later time gives the front wheel (5) back to the first element (18) wherein during said giving the front wheel (5) carries out at least one of the following movements: up or down; front or backward; turning around an axis parallel to the hub axis, for which movements the storage has convenient means.
